# EUROPEAN PATENT APPLICATION

(11) **EP 0 553 965 A1**
(43) Date of publication of application: **04.08.1993**
(21) Application number: 93300193.5
(22) Date of filing: 13.01.1993
(51) Int. Cl.: C09B 67/48, C09B 29/46, C09B 69/02

(54) **An azo pyrazolone compound with characteristic X-ray diffraction pattern**

(30) Priority: 30.01.1992 GB 9201951
(71) Applicant: ZENECA LIMITED, London W1Y 6LN (GB)
(72) Inventor: Chorlton, Alan Patrick, Stockport, Cheshire SK6 5EW (GB); Mason, James, Littleborough, Rochdale OL15 0LW (GB)
(74) Representative: Giles, David Eric

(57) **Abstract**

An azo pyrazolone compound of the formula: 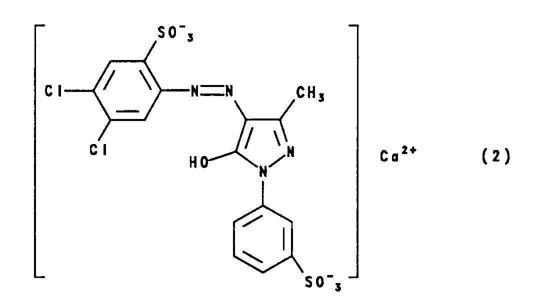
having an X-ray diffraction pattern exhibiting characteristic lines at 2ϑ values of 4.9, 8.5, 10.0, 15.3, 15.9. 16.3, 17.78, 20.00, 25.58 and 26.02 degrees.

## Description

This invention relates to a pigment and more particularly to a yellow pigment of the azo pyrazolone series.

The use of pigments for the colouring of plastics materials is well known. For the production of yellow colorations, it is traditional to employ cadmium and lead chrome pigments but these are now being phased out because of environmental pressures.

In DE-OS 2616981, there are described yellow pigments of the formula: 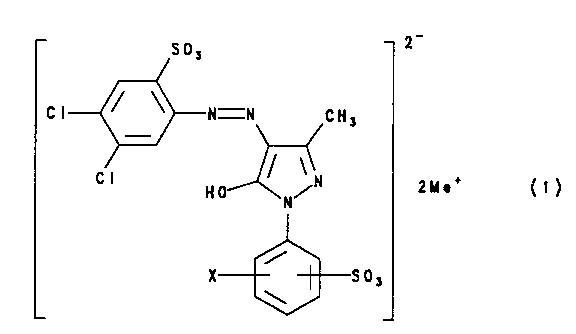
wherein X is hydrogen, chlorine or methyl and Me⁺ is an alkali metal, alkaline earth metal or heavy metal cation.

One compound falling within the scope of Formula 1 is the calcium salt of the formula: 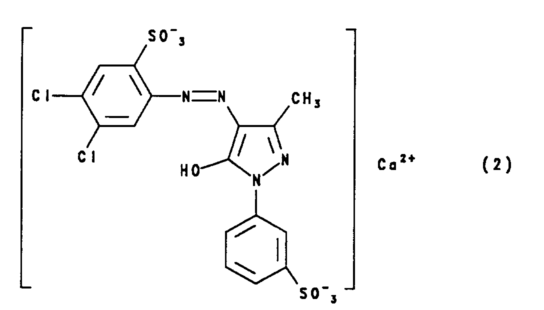
the preparation of which is described in Example 3 of DE-OS 2616981. This compound has achieved commercial success as a reddish-yellow pigment and is known as C.I. Pigment Yellow 183.

It has now been found that a compound of Formula 2 having a polymorphic form different from that of C.I. Pigment Yellow 183, as characterised by the X-ray diffraction spectrum, may be prepared by a method hereinafter described.

Accordingly, the invention provides an azo pyrazolone compound of Formula 2 having an X-ray diffraction pattern exhibiting characteristic lines at 20 values of 4.9, 8.5, 10.0, 15.3, 15.9, 16.3, 17.78, 20.00, 25.58 and 26.02 degrees.

The distinction between the new polymorph and C.I. Pigment Yellow 183 may be illustrated by reference to the attached drawings in which:
Fig. 1 is an X-ray diffraction spectrum chart of the compound of the invention, and
Fig. 2 is an X-ray diffraction spectrum chart of C.I. Pigment Yellow 183, both spectra having been determined by standard techniques.

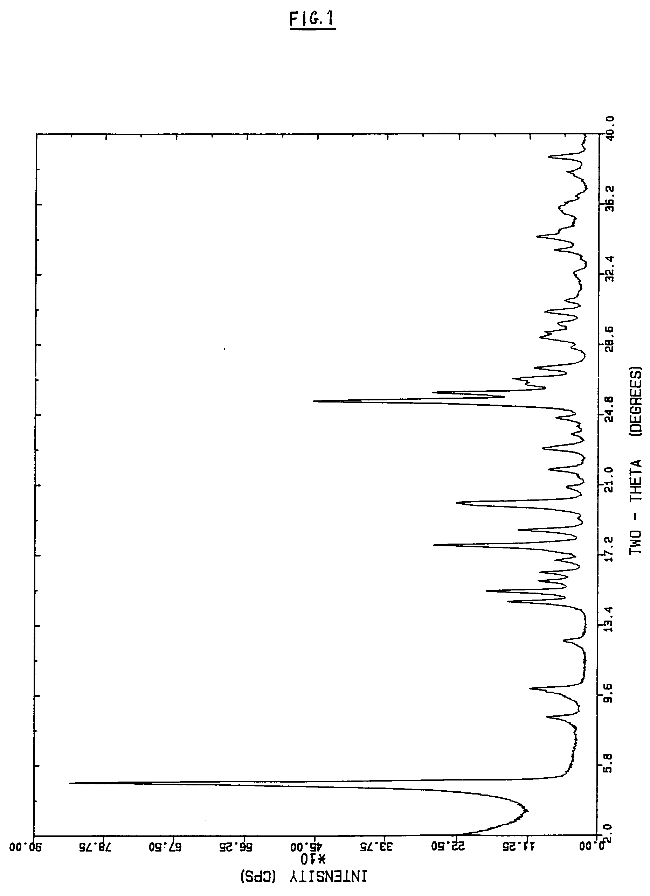

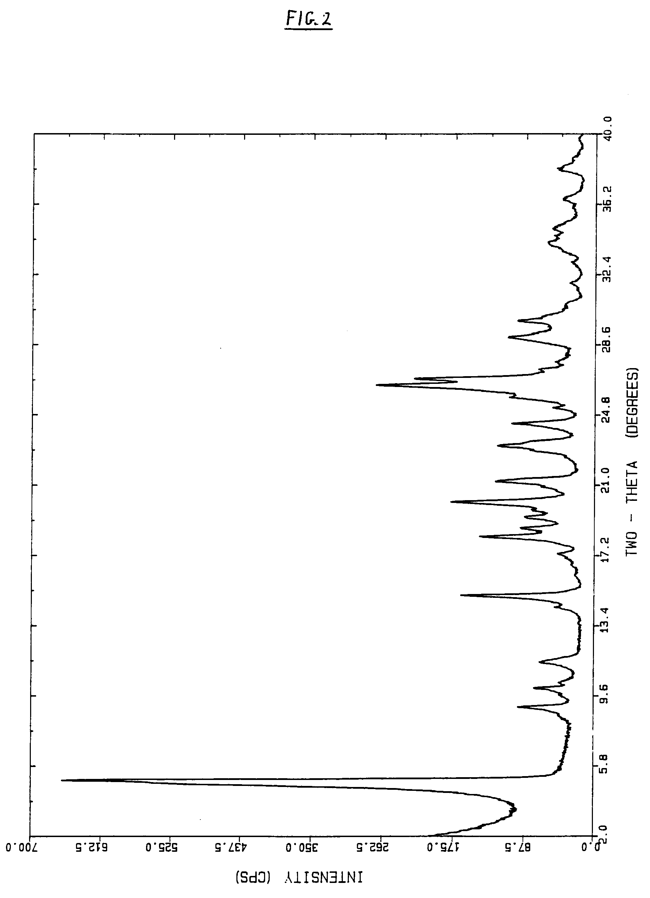

Thus, it can be seen from Fig. 1 that the spectrum of the new polymorph has distinctive peaks at 2ϑ angles of 8.5, 12.6, 14.74, 15.3, 15.9, 16.3, 17.78, 18.6, 25.58, 26.02, 27.38, 30.42 and 38.8 degrees which are absent from the spectrum of C.I. Pigment Yellow 183 shown in Fig. 2. Similarly, it can be seen from Fig. 2 that the spectrum of C.I. Pigment Yellow 183 has peaks at 2ϑ angles of 9.0 and 11.4 degrees which are not present in the spectrum of the new polymorph.

As described in DE-OS 2616981, C.I. Pigment Yellow 183 may be prepared by diazotising 2-amino-4,5-dichlorobenzenesulphonic acid and coupling the resulting diazo compound with 3-methyl-1-(3'-sulphophenyl) pyrazol-5-one followed by laking with calcium chloride. The compound of the invention may be prepared in a similar manner provided the calcium salt is added under carefully controlled conditions. Preferably, an excess amount of an aqueous solution of calcium chloride is rapidly added to an aqueous solution of the sodium salt of 4-(4',5'-dichloro-2'-sulphophenylazo)-3-methyl-1-(3''-sulphophenyl) pyrazol-5-one at a temperature in excess of 80°C, for example about 90°C, stirring is continued at a similar temperature for at least 2 hours and the calcium salt is then filtered off. The addition of the calcium chloride solution to the sodium salt solution should be as rapid as the scale of preparation allows.

The compound of the invention has a greener shade than C.I. Pigment Yellow 183 and may be used as a pigment in conventional manner. In particular, it may be used alone or in conjunction with other pigments for the coloration of plastics materials, for example polyvinyl chloride, polystyrene and polyolefins, where it exhibits excellent properties.

The invention is illustrated but not limited by the following Example.

### Example

2-Amino-4,5-dichlorobenzenesulphonic acid (4.8g), de-ionised water (50 ml) and hydrochloric acid were stirred in an ice-bath, followed by sufficient 48% NaOH to form a solution. The solution was then cooled to 0-5^{o}C and a further amount (5.1 ml) of hydrochloric acid was added. A solution of sodium nitrite (1.56 g) in de-ionised water (5 ml) was added all at once and the mixture was stirred at 0-5°C for 30 mins. Excess nitrite was then removed by adding a few ml of 10% sulphamic acid solution.

3-Methyl-1-(3'-sulphophenyl) pyrazol-5-one (5.4 g) was added to de-ionised water (50 ml) and the pH was adjusted to 6.5 by the addition of 48% NaOH. The solution was then stirred at 0-5°C and the diazo solution was added over 10 mins whilst maintaining the pH at 6.5 with 48% NaOH. The coupling mixture was then stirred overnight at room temperature.

The resultant product was then heated to 90°C and a 10% w/v soln. of CaCl₂ was added (volume of coupling = 320 ml, so 32g of CaCl₂ in 40 ml water), all at once, and stirred for a further 3 hrs. at 90°C. It was then filtered hot and washed chloride ion-free with de-ionised water (1 l.), and dried at 40°C, giving 9.8 g (90%) of a yellow solid.

The product had an X-ray diffraction pattern as shown in Fig. 1, exhibiting significant lines as set forth in the following Table. The X-ray diffraction spectrum was determined using standard techniques, the radiation being the K-alpha doublet of copper.

**TABLE**

| 2ϑ° | Intensity |
|---|---|
| 4.9 | Strong |
| 8.5 | Weak |
| 10.0 | Weak |
| 12.6 | Weak |
| 14.74 | Weak |
| 15.30 | Weak |
| 17.78 | Medium |
| 18.60 | Weak |
| 20.00 | Medium |
| 20.08 | Medium |
| 25.58 | Medium |
| 26.02 | Medium |
| 27.38 | Weak |
| 30.42 | Weak |
| 38.78 | Weak |

## Claims

1. An azo pyrazolone compound of the formula: 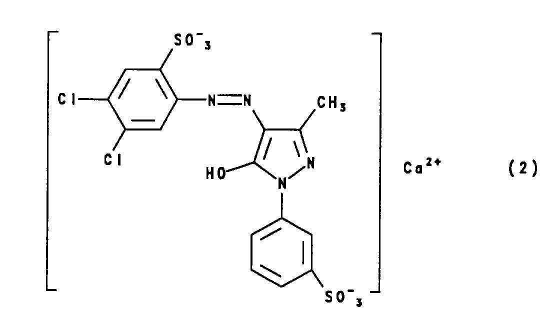 having an X-ray diffraction pattern exhibiting characteristic lines at 2ϑ values of 4.9, 8.5, 10.0, 15.3, 15.9. 16.3, 17.78, 20.00, 25.58 and 26.02 degrees.

2. A method for the preparation of the azo pyrazolone compound defined in Claim 1 which comprises rapidly adding an excess amount of an aqueous solution of calcium chloride to an aqueous solution of the sodium salt of 4-(4',5'-dichloro-2'-sulphophenylazo)-3-methyl-1-(3''-sulphophenyl)pyrazol-5-one at a temperature in excess of 80°C and continuing stirring in the same temperature range for at least 2 hours.
